Europäisches Patentamt

European Patent Office

Office européen des brevets

(11) Veröffentlichungsnummer: **0 191 898**
**A1**

## (12) EUROPÄISCHE PATENTANMELDUNG

(21) Anmeldenummer: 85112235.8

(22) Anmeldetag: 26.09.85

(51) Int. Cl.⁴: **B29C 51/42** , B29B 13/02

Die Bezeichnung der Erfindung wurde geändert (Richtlinien für die Prüfung im EPA, A-III, 7.3).

(30) Priorität: 05.10.84 DE 3436686

(43) Veröffentlichungstag der Anmeldung:
27.08.86 Patentblatt 86/35

(84) Benannte Vertragsstaaten:
AT BE CH DE FR GB IT LI NL SE

(71) Anmelder: MULTIVAC SEPP HAGGENMÜLLER KG

D-8941 Wolfertschwenden(DE)

(72) Erfinder: Medwed, Emmerich
Bergstrasse 3
D-8941 Wolfertschwenden(DE)

(74) Vertreter: Prüfer, Lutz H., Dipl.-Phys.
Harthauser Strasse 25d
D-8000 München 90(DE)

(54) Heizeinrichtung zum Erwärmen einer zu verformenden Folie.

(57) Es wird eine Verpackungsmaschine mit einer Formstation und einer Heizeinrichtung zum Erwärmen der zu verformenden Folie (2) geschaffen. Damit die wirksame Oberfläche der Heizeinrichtung einer sich bei der Erwärmung der Folie ergebenden Vergrößerung der Folienfläche angepaßt ist, weist die Oberfläche (3) sich in zueinander geneigten Richtungen vorgesehene erste und zweite konkave Vertiefungen (4, 5; 6, 7) auf, die sich miteinander schneiden. Die Vertiefungen werden durch sich miteinander schneidender längsförmiger Vertiefungen in den zueinander geneigten Richtungen gefertigt.

Fig. 1

EP 0 191 898 A1

Verpackungsmaschine mit einer Formstation und einer Heizeinrichtung zum Erwärmen einer zu verformenden Folie

Die Erfindung betrifft eine Verpackungsmaschine nach dem Oberbegriff des Anspruches 1.

Eine derartige Verpackungsmaschine ist aus der DE--OS 3009981 bekannt. Bei dieser ist eine wellenförmige Oberfläche mit sich in Längsrichtung erstreckenden Wellentälern und Wellenbergen vorgesehen. Dadurch wird erreicht, daß beim Erwärmen die Gefahr des Einfangens von Luft beim Anlegen der Folie an die Oberfläche geringer ist als bei ebenen Oberflächen.

Die zu erwärmenden Folien aus Kunststoff dehnen sich bei der Erwärmung aus. Die Ausdehnungskoeffizienten sind nur in engen Temperaturbereichen linear und sind abhängig vom jeweiligen Halbzeug bzw. dem dazu angewendeten Herstellungsprozeß. Je nach Kunststoffart werden beim Rohmaterial Werte von 5 bis 15 x $10^{-5}$ (1/°) angegeben. Bedingt durch den Herstellungsprozeß treten oft Fälle auf, daß ein negativer Wert festgestellt wird, das heißt, daß die Folie bei Erwärmung schrumpft. Bei einer festen Einspannung der Folie in seitlich von der Folienbahn vorgesehenen Greiferketten tritt bei Erwärmung eine Zunahme der Materialspannung dadurch auf. Wenn Kunststoffolien mit positiven Temperaturkoeffizienten mittels Kontaktheizung erwärmt werden, wobei die Folie durch Druckdifferenz mit der Oberfläche eines Heizelementes in Kontakt gebracht wird, dann wird sich die Kunststofffolie nur so lange ausdehnen, wie die Folie nicht genügend erweicht ist, um eine Druckspannung zu erzeugen. Bei genügender Erweichung wird sich keine Ausdehnung mehr auswirken. In der Praxis tritt diese Erweichung je nach Folienart bei Temperaturen um 80 bis 120°C auf.

Aufgabe der Erfindung ist es, eine Verpackungsmaschine der oben genannten Art derart auszubilden, daß die Oberfläche der Heizeinrich tung es ermöglicht, daß sich auch eine Folie, deren Oberfläche sich beim Erwärmen vergrößert, frei an die Oberfläche der Heizplatte anlegen kann. Die wirksame Oberfläche der Heizplatte soll sowohl in Längs- als auch in Querrichtung zur Bewegungsbahn der Folie größer sein als die Breite bzw. Länge der Projektion der entsprechenden Oberfläche, und andererseits soll die Fläche doch so ausgebildet sein, daß ein leichtes Anliegen der Folie an der Oberfläche erreicht wird. Ferner soll die Oberfläche so ausgebildet sein, daß sie leicht herstellbar ist. Schließlich soll ein Verfahren zur Herstellung der Oberfläche angegeben werden.

Diese Aufgabe wird durch eine eingangs beschriebene Verpackungsmaschine gelöst, die gemäß der Erfindung gekennzeichnet ist durch die Merkmale des Patentanspruches 1.

Das Verfahren zur Herstellung der Oberfläche einer Einrichtung zum Erwärmen von Folien, bei dem eine Mehrzahl von zueinander benachbarten konkaven Vertiefungen vorgesehen werden, ist dadurch gekennzeichnet, daß mittels eines Fräsers konkave erste Vertiefungen seitlich gegeneinander versetzt und zweite unter einem Winkel dazu angeordnete konkave Vertiefungen gefräst werden.

Weitere Merkmale und Zweckmäßigkeiten der Erfindung ergeben sich aus der Beschreibung von Ausführungsbeispielen anhand der Figuren. Von den Figuren zeigen:

Fig. 1 eine perspektivische Darstellung einer Heizplatte mit einer teilweise fertiggestellten Oberfläche;

Fig. 2 eine der in Fig. 1 entsprechende Darstellung mit fertiggestellter Oberfläche;

Fig. 3 ein Teil entlang des Schnittes III-III in Fig. 2 in vergrößerter Darstellung mit aufgelegter Folie; und

Fig. 4 den in Fig. 3 gezeigten Ausschnitt mit an die Oberfläche angelegter Folie.

Fig 5 eine abgewandelte Ausführungsform; und

Fig. 6 einen Schnitt durch einen Teil der abgewandelten Ausführungsform.

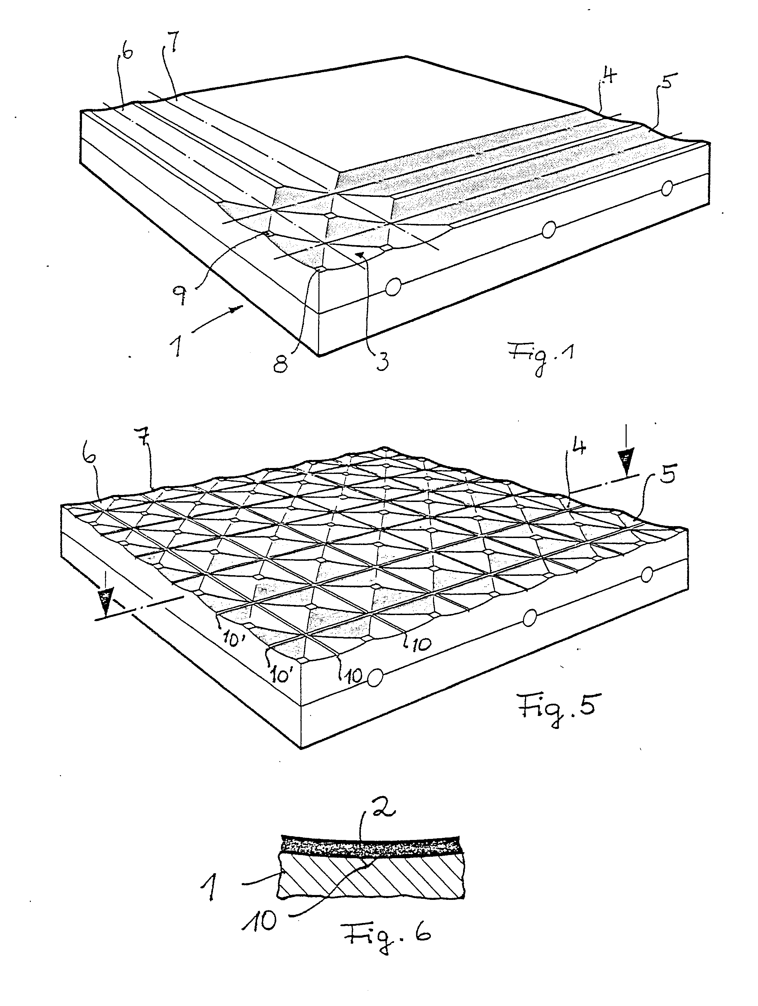

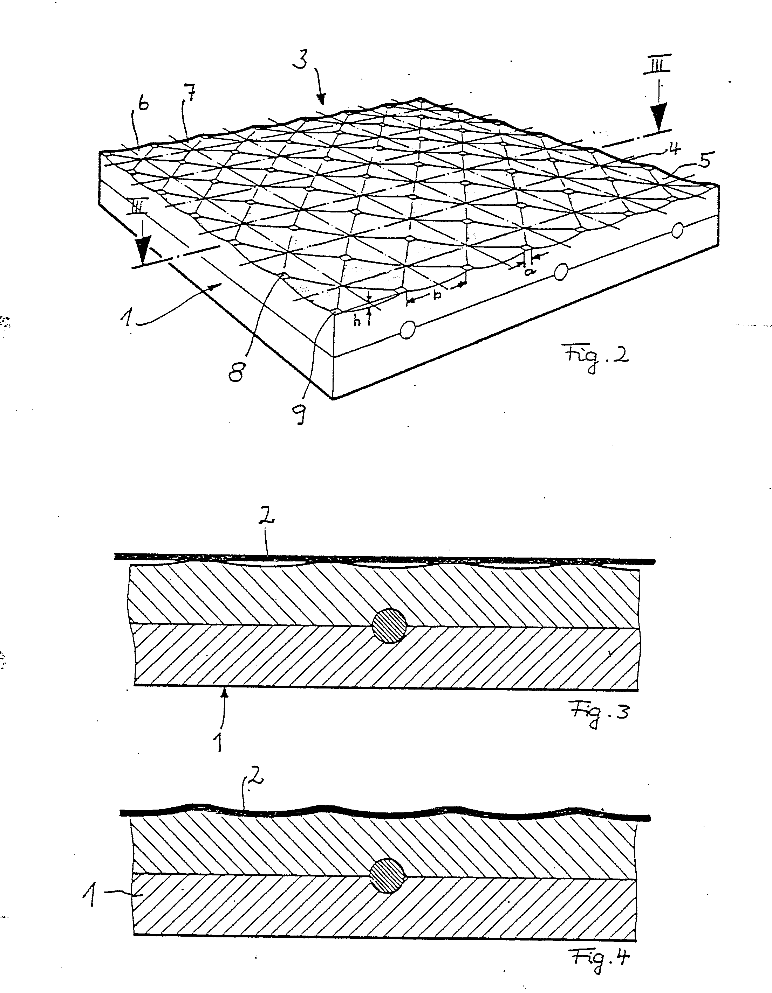

Die Heizplatte 1 weist eine mit einer zu erwärmenden Folie 2 in Kontakt zu bringende Oberfläche 3 auf. Wie am besten aus Figur 1 ersichtlich ist, ist die Oberfläche 3 dadurch gebildet, daß sich eine Mehrzahl erster konkaver längsförmiger Vertiefungen 4, 5 und dazu sich quer erstreckende zweite längsförmige konkave Vertiefungen 6, 7 - schneiden. Die Vertiefungen werden beispielsweise mit einem schräggestellten Stirnfräser oder einem geeigneten Scheibenfräser in die Oberfläche eingefräst. Zunächst werden die Vertiefungen in der einen Richtung und anschließend in der dazu geneigten Richtung eingefräst. Vorzugsweise erstreckt sich die zweite Richtung wie in dem in den Figuren gezeigten Ausführungsbeispiel senkrecht zu der ersten Richtung.

Die Abmessungen der Vertiefungen und die Periodizität derselben wird in Abhängigkeit von dem zu verwendenden Folienmaterial bestimmt. Damit einerseits eine ausreichende Flächenvergrößerung und andererseits ein gutes Anliegen der Folie an der Fläche erreicht wird, wird die Tiefe h der konkaven Vertiefungen 4 bis 7 bis 1,5 mm, die Breite b der Vertiefungen zwischen 20 und 35 mm und der Abstand a zwischen zwei benachbarten Vertiefungen bis 5 mm gewählt. Erfindungsgemäß liegt h zwischen 0,3 und 0,7 mm, b zwischen 25 und 30 mm und zwischen 1 und 4 mm. Die oben genannten Abmessungen werden dabei erfindungsgemäß so gewählt, daß die sich ergebende Längenänderung gegenüber der Projektion der Fläche kleiner als 15 ‰ und insbesondere zwischen 2 und 8 ‰ in Richtung der Vertiefungen beträgt. Bei einem Ausführungsbeispiel betragen die Abmessungen:

$$a = 2 \text{ mm}$$

$$b = 32 \text{ mm}$$

$$h = 1,5 \text{ mm.}$$

Die daraus resultierende Längenänderung beträgt 6,2 ‰.

In dem gezeigten Ausführungsbeispiel sind die Mehrzahl der ersten Vertiefungen 4, 5 und die Mehrzahl der zweiten Vertiefungen 6, 7 in gleicher Weise mit gleichen Abmessungen ausgebildet. In Abhängigkeit von der Folie kann es zweckmäßig sein, unterschiedliche Ausführungsarten in den zueinander geneigten Richtungen zu verwenden, wenn die Folie verschiedene Ausdehnungskoeffizienten längs und quer zur Folien bahn aufweist. In diesem Fall wird vorzugsweise die Tiefe in den zueinander quer verlaufenden Richtungen im wesentlichen gleich gewählt und die unterschiedliche Längenänderung durch unterschiedliche Breiten b und gegebenenfalls Abstände a erreicht. Wie am besten aus den Figuren 3 und 4 ersichtlich ist, liegt die Folie 2 im ersten Moment der Berührung mit der Oberfläche 3 eben auf den sich durch die Abstände a ergebenden inselförmigen Bereiche 8, 9 an. Die zwischen der Oberfläche 3 und der Folie 2 befindliche Luft entweicht über die Vertiefungen. Aufgrund der Erwärmung und eines auf die Folie ausgeübten Druckes legt sich die Folie - schließlich in der in Figur 4 gezeigten Weise vollständig an die gegenüber der Projektion auf die Oberfläche vergrößerten wirksamen Oberfläche an.

Die in Fig. 5 gezeigte Ausführungsform unterscheidet sich gegenüber der oben beschriebenen Ausführungsform lediglich dadurch, daß auf der mit der Folie 2 in Kontakt zu bringenden Oberfläche Rillen 10, 10' vorgesehen sind. Die Rillen 10 erstrecken sich parallel zu den zweiten Vertiefungen 6, 7, und zwar jeweils entlang des Grundes dieser Vertiefungen, also entlang der Mittellinie zwischen den die Vertiefungen begrenzenden inselförmigen Bereichen 8, 9. Die Rillen 10, 10' erstreckt sich dazu im wesentlichen senkrecht entlang des jeweiligen Grundes der ersten Vertiefungen 4, 5, also ebenfalls entlang der Mittellinie zwischen den die ersten Vertiefungen begrenzenden inselförmigen Bereichen.

Die Rillen 10, 10' sind dreieckförmig ausgebildet und werden in der Praxis mit einer Reißnadel eingeritzt. Die Breite und die Tiefe betragen jeweils ca. 0,1 mm. In ihren Kreuzungsstellen stellen sie Verbindungen zwischen den sich schneidenden Rillen dar. Bedingt durch die geringe Breite der Rillen wird die Folie 2 beim Kontakt mit der Heizplattenoberfläche nicht in die Rille eingedrückt. Es verbleibt also nach wie vor ein kleiner Zwischenraum, der zur Luftableitung dient und bewirkt, daß sich die Folie gleichmäßig an die Heizoberfläche anlegt.

## Ansprüche

1. Verpackungsmaschine mit einer Formstation zum Verformen einer Folie und einer Einrichtung zum Erwärmen der zu verformenden Folie, wobei die Folie zum Erwärmen mit einer parallel zur Folie angeordneten Oberfläche der Einrichtung in Kontakt bringbar ist, und die Oberfläche eine Mehrzahl von zueinander benachbarten länglichen konkaven ersten Vertiefungen aufweist, dadurch gekennzeichnet, daß eine Mehrzahl von zueinander benachbarten länglichen konkaven zweiten Vertiefungen vorgesehen sind, die sich unter einem Winkel zu den ersten Vertiefungen erstrecken.

2. Verpackungsmaschine nach Anspruch 1, dadurch gekennzeichnet, daß sich die ersten Vertiefungen zueinander und die zweiten Vertiefungen zueinander jeweils im wesentlichen parallel zueinander erstrecken.

3. Verpackungsmaschine nach Anspruch 1 oder 2, dadurch gekennzeichnet, daß die ersten und die zweiten Vertiefungen annähernd rechtwinklig zueinander angeordnet sind.

4. Verpackungsmaschine nach einem der Ansprüche 1 bis 3, dadurch gekennzeichnet, daß die Tiefe (h) der Vertiefungen, ihre Breite (b) und der Abstand (a) der Vertiefungen zueinander so gewählt sind, daß die sich daraus ergebende Längenänderung bis 15%o und vorzugsweise zwischen 2 und 8%o beträgt.

5. Verfahren zum Herstellen der Oberfläche einer Einrichtung zum Erwärmen von Folien, bei dem eine Mehrzahl von zueinander benachbarten konkaven Vertiefungen vorgesehen werden, dadurch gekennzeichnet, daß mittels eines Fräsers konkave erste Vertiefungen seitlich gegeneinander versetzt und zweite unter einem Winkel dazu angeordnete konkave Vertiefungen gefräst werden.

6. Verpackungsmaschine nach einem der Ansprüche 1 bis 4, dadurch gekennzeichnet, daß die Oberfläche eine Mehrzahl von jeweils im wesentlichen entlang des Grundes einer zugehörigen der ersten Vertiefungen verlaufenden ersten Rillen und eine Mehrzahl von jeweils im wesentlichen entlang des Grundes einer zugehörigen der zweiten Vertiefungen verlaufenden zweiten Rillen aufweist.

Fig. 1

Fig. 5

Fig. 6

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | FR-A-2 501 629  (MULTIVAC SEPP HAGGENMÜLLER KG) <br> * Insgesamt * | 1-6 | B 29 C  51/42 <br> B 29 B  13/02 |
| | --- | | |
| Y | US-A-3 159 695  (H. BEHRINGER) <br> * Spalte 9, Zeilen 7-74; Figuren 6-8 * | 1-6 | |
| | --- | | |
| A | FR-A-2 034 791  (A.E. MacGUIRE) <br> * Seite 2, Zeilen 11-25; Seite 11, Zeile 19 - Seite 12, Zeile 7; Figuren * | 1-3 | |
| | --- | | |
| A | CH-A- 580 521  (HERMANN WALDNER KG) <br> * Spalte 3, Zeilen 23-30; Figuren * | 1-3 | |
| | --- | | RECHERCHIERTE SACHGEBIETE (Int. Cl.4) |
| A | CH-A- 454 433  (UNILEVER NV) | | B 29 C <br> B 29 B <br> B 65 B |
| | --- | | |
| A | FR-A-2 078 575  (MAHAFFY & HARDER ENGINEERING CO.) | | |
| | --- | | |
| A | US-A-4 079 232  (T.L. BROKOFF et al.) | | |
| | ----- | | |

Der vorliegende Recherchenbericht wurde für alle Patentansprüche erstellt.

| Recherchenort <br> DEN HAAG | Abschlußdatum der Recherche <br> 03-04-1986 | Prüfer <br> SZAMOCKI G.J.A. |
|---|---|---|